# EUROPEAN PATENT APPLICATION

(11) **EP 2 644 583 A1**
(43) Date of publication of application: **02.10.2013**
(21) Application number: 12164099.9
(22) Date of filing: 13.04.2012
(51) Int. Cl.: C04B 41/50, C04B 28/00

(54) **A method of coating a geopolymer onto an article**

(30) Priority: 29.03.2012 MY PI2012700134
(71) Applicant: King Abdulaziz City for Science & Technology (KACST), 11442 Riyadh (SA); Universiti Malaysia Perlis, 01000 Perlis (MY)
(72) Inventor: Abdullaj, Mohd Mustafa Al Bakri, 01000 Perlis (MY); Kurdi, Abdulaziz A., 11442 Riyadh (SA); Juwayr, Bader Z., 11442 Riyadh (SA); Binhussain, Mohammed, 11442 Riyadh (SA); Selimin, Mohammad Tamizi, 01000 Perlis (MY); Hussin, Kamarudin, 01000 Perlis (MY); Ghazali, Che Mohd Ruzaidi, 01000 Perlis (MY); Jamaludin, Liyana, 01000 Perlis (MY); Noor, Norazian Mohamad, 01000 Perlis (MY); Razak, Rafiza Abdul, 01000 Perlis (MY); Yahya, Zarina, 01000 Perlis (MY); Ahmad, Muhd Izzat, 01000 Perlis (MY)
(74) Representative: Goddar, Heinz J.

(57) **Abstract**

A method of coating a geopolymer onto an article that is made of high heat applicable material, the method comprising the steps of providing geopolymer paste prepared from reacting fly ash-derived pozzolanic material with an alkaline activator solution; coating the geopolymer paste onto the article; curing the coated article; and sintering the cured article at a temperature ranging from 100°C to 1500°C.

## Description

### FIELD OF INVENTION

This invention relates to a method for coating a geopolymer onto an article. In more particular, this invention relates to a method for coating a geopolymer onto the article, the geopolymer has high fire and erosion resistances and high mechanical strength.

### BACKGROUND OF THE INVENTION

Surface deterioration of concrete, metal or clay caused by high heat, chemicals or abrasion is becoming one of the major problems for durability of structures made by these materials. The surface deterioration could develop into structural problems, especially in reinforced concrete, metal or clay structural elements. Prevention of liquid ingress into concrete or clay structures is desired, thus preventing the ingress of chemicals such as chloride from salts and subsequent deterioration. Many approaches have been made to enhance reinforcement or prevent corrosion of these materials. Geopolymer is an alternative pozzolanic material that has ceramic-like properties.

Geopolymer technology has the potential to reduce emissions by 80% because high temperature calcining is not required. It also exhibits ceramic-like properties with good resistance to fire at elevated temperatures. Geopolymers have amorphous to semi-crystalline structures, equivalent to certain zeolitic materials with excellent properties such as high fire and erosion resistances and high mechanical strength. Materials that produce geopolymer include fly ash, which refers to the inorganic, incombustible matter present in coal that is fused into a glassy, amorphous structure during the combustion process.

There are some patented technologies which disclose methods for producing geoplymer composite material. Of interest is U.S. Patent Document No. US 7745363(B1) which discloses a geopolymer composite material having low coefficient of thermal expansion and high strength. The geopolymer material maybe used without prefiring, with prefiring to about 300°C or with firing at relatively low temperatures to provide acid resistance and inhibit cracking during shrinkage. However, the geopolymer material does not contain fly ash.

Another U.S. Patent Document No. US 2007011221100(A1) discloses a process for preparing a self glazed geopolymer tile using fly ash and and granulated blast furnace slag. However, the fly ash is mixed with the granulated blast furnace slag and alkaline activator solution and cured at a temperature ranging from 50°C to 350°C to obtain the geopolymer tile without subjecting to a sintering process.

Another U.S. Patent Application No. US 20070104859(A1) discloses a method of thermal mapping comprising coating a surface of an article with a composition having a geopolymer and a finer material and curing the coated article. While this prior art discloses the method to cure a geopolymer coated article, it did not explore a way to increase strength and chemical resistance of the geopolymer coated article by a sintering process.

Therefore, a strong need exists for the development of a coating, which is protective against heat, chemicals and abrasion while compatible to concrete, metals or clay materials. The coating is desired for an increased compressive strength and chemical resistance that uses recycled fly ash in its manufacturing process.

### SUMMARY OF THE INVENTION

The primary object of the present invention is to provide a solution to minimize surfaces deterioration of articles made by concrete, metal or clay and capable of withstanding severe exposure conditions such as high heat and chemical corrosion.

Another object of the present invention is to provide a method that uses a fly-ash based geopolymer as a coating for the article.

At least one of the proceeding objects is met, in whole or in part, by the present invention, in which the preferred embodiment of the present invention describes a method for coating a geopolymer onto an article that is made of high heat applicable material, the method comprising the steps of providing geopolymer paste prepared from reacting fly ash-derived pozzolanic material with an alkaline activator solution; coating the geopolymer paste onto the article; curing the coated article; and sintering the cured article at a temperature ranging from 100°C to 1500°C.

One of the embodiments of the present invention discloses that the method further comprising providing clay-based pozzolanic material, volcano mud-based pozzolanic material, marine clay-based pozzolanic material or a combination thereof to the fly ash-derived pozzolanic material prior to reacting with the alkaline activator solution.

Another embodiment of the present invention discloses that the high heat applicable material is concrete, clay, ceramic, metal or alloy.

Another embodiment of the present invention discloses that the geopolymer coated article is cured at temperature ranging from 60°C to 75°C.

Another embodiment of the present invention describes that the the sintering process of the cured article has heating and cooling rates ranging from 3°C/minutes to 8°C/minutes.

Yet another embodiment of the present invention describes that the concentration ratio between pozzolanic material to alkaline activator is 2.5 ― 3.5 : 1.

Another embodiment of the present invention describes that the alkaline activator solution is formed by sodium silicate and sodium hydroxide.

A further embodiment of the present invention discloses that the sodium silicate consists 8-10% of sodium oxide, 25-35% of silicon dioxide, and 55-65% of water.

A particular embodiment of the present invention discloses that the sintered article has a compressive strength ranging from 14 MPa to 45 MPa.

The present preferred embodiments of the invention consists of novel features and a combination of parts hereinafter fully described and illustrated in the accompanying drawings and particularly pointed out in the appended claims; it being understood that various changes in the details may be effected by those skilled in the arts but without departing from the scope of the invention or sacrificing any of the advantages of the present invention.

### DETAILED DESCRIPTION OF THE INVENTION

Hereinafter, the invention shall be described according to the preferred embodiments of the present invention and by referring to the accompanying description and drawings. However, it is to be understood that limiting the description to the preferred embodiments of the invention and to the drawings is merely to facilitate discussion of the present invention and it is envisioned that those skilled in the art may devise various modifications without departing from the scope of the appended claim.

The present invention relates to a method for coating a geopolymer onto an article. In more particular, the present invention relates to a method for coating a geopolymer onto the article, the geopolymer has high fire and erosion resistances and high mechanical strength. This fly ash-based porous geopolymer displayed increased strength after temperature exposure.

According to the preferred embodiment of the present invention, a method for coating a geopolymer onto an article made of high heat applicable material is disclosed. The method comprising the steps of providing geopolymer paste prepared from reacting fly ash-derived pozzolanic material with an alkaline activator solution; coating the geopolymer paste onto the article; curing the coated article; and sintering the cured article at a temperature ranging from 100°C to 1500°C. The article is made of concrete, clay, ceramic, metal, alloy or other high heat applicable material.

According to one of the embodiments of the present invention, the fly ash-derived pozzolanic material as disclosed contains alumino-silicate and is preferred to be a dry, low calcium and Class F fly ash. Fly ash is a burnt and powdery derivative of inorganic mineral matter that generates during the combustion of pulverized coal in the thermal power plant. Owing to its pozzolanic property, fly ash is preferred to be used in geopolymer production due to its hydraulic or self-cementing property. The fly ash-derived pozzolanic material has a preferred molar ratio between silicate to aluminium of 3.5 : 1 due to its promising fire resistant characteristics and capability of exhibiting strong adhesion to surfaces. The fly ash-derived pozzolanic material can be oil palm fly ash, volcanic fly ash or any other fly ash.

In another embodiment of the present invention, the alkaline activator solution is formed by sodium silicate and sodium hydroxide. Alternatively, the alkaline activator solution can be formed by water glass and any alkali hydroxide such as potassium silicate and potassium hydroxide respectively. Preferably, the sodium silicate consists 8-10% of sodium oxide, 25-35% of silicon dioxide and 55-65% of water. Most preferably, the sodium silicate consists of 9.4% of sodium oxide, 30.1% of silicon dioxide and 60.5% of water. The sodium hydroxide is preferred to be in pellet form with a 97% purity. The alkaline activator solutions are preferred to be prepared by dissolution of the sodium hydroxide in one liter of distilled water and subsequently mixed with the sodium silicate.

In yet another embodiment of the present invention, the concentration ratio between fly ash-derived pozzolanic material to alkaline activator is 2.5 ― 3.5 : 1. Preferably, the concentration ratio between the fly ash-derived pozzolanic material to alkaline activator is 3.5 : 1. Surface deterioration of frequently exposed articles such as metal, clay or concrete is a major problem because of loss of surface cover caused by corrosion, heat or abrasion tend to cause reinforcement failure. Fly ash-based geopolymer exhibits high compressive strength, resistant to chemical and heat attack and it is cost efficient in production. The geopolymer paste as described herein is a protective coating material suitable to be used as a refractory material. The geopolymer paste cures to a glassy texture and it is subsequently subjected to the sintering process at a temperature range from 100 °C up to 1500 °C. The sintered geopolymer coated article is capable of withstanding a temperature ranging from 600°C to 1800°C.

In another embodiment of the present invention, the method further comprising providing clay-based pozzolanic material volcano mud-based pozzolanic material, marine clay-based pozzolanic material or a combination thereof to the fly ash-derived pozzolanic material prior to reacting with the alkaline activator solution. The fly ash-derived pozzolanic material can be mixed with clay, ground-granulated blast-furnace slag (GGBS), marine clay or volcano mud to produce the geopolymer paste.

Still another embodiment of the present invention describes that the alkaline activator solution is formed by sodium silicate and sodium hydroxide. Preferably, the concentration ratio between sodium silicate to sodium hydroxide ranges from 2.5 : 1 to 3.5 : 1, most preferably, 3.5 : 1. The ratio of 3.5 : 1 between sodium silicate to sodium hydroxide produces a high compressive strength of 42.40 MPa after a sintering process at a temperature of 1000°C.

In another embodiment of the present invention, the geopolymer coated article is cured at a temperature ranging from 40°C to 100°C. Curing conditions have a significant effect in mechanical strength of the coated article. Preferably, the geopolymer coated article is cured for 4 to 48 hours for synthesis of the geopolymer coat.

In a further embodiment of the present invention, the alkaline solution was added and mixed with the fly ash-derived pozzolanic material for approximately five minutes to obtain a homogeneous mixture. A foaming agent solution, such as superplacticizer or any other types of dispersing admixture, is preferred to be added to the geopolymer paste to avoid particle aggregation and obtain a porous geopolymer concrete upon completion of the curing and sintering process. The alkaline activator solution is preferred to be prepared just as before being added to the fly ash-derived pozzolanic material to ensure complete polymerization.

In a particular embodiment of the present invention, the sintering process of the cured article has heating and cooling rates ranging from 3°C/minutes to 8°C/minutes. The cured article is preferred to be sintered at a temperature ranging from 100°C to 1500°C for approximately three hours and under the heating and cooling rates of 5°C/minutes.

Hereinafter, the geopolymer coating is potentially suitable to be used as protective coating material, refractory paint, toxic immobilization solution and decorative paint with high strength and corrosion resistant properties. The geopolymer paste can be formed onto articles by any techniques including spraying, painting or dipping. The geopolymer paste can be applied on articles made of ceramic, metal or concrete that is exposed to high heat and chemical in applications such as pressure vessel liners and transportation structures.

The present disclosure includes as contained in the appended claims, as well as that of the foregoing description. Although this invention has been described in its preferred form with a degree of particularity, it is understood that the present disclosure of the preferred form has been made only by way of example and that numerous changes in the details of construction and the combination and arrangements of parts may be resorted to without departing from the scope of the invention.

### EXAMPLE

An example is provided below to illustrate different aspects and embodiments of the present invention. The example is not intended in any way to limit the disclosed invention, which is limited only by the claims.

**Table 1**

| Concentration ratio of sodium silicate and sodium hydroxide | Compressive Strength at third day of experiment | | | |
|---|---|---|---|---|
| | Unsintered (MPa) | 600°C (MPa) | 800°C (MPa) | 1000°C (MPa) |
| 2.5 | 12.12 | 10.41 | 8.90 | 8.63 |
| 3.0 | 15.56 | 10.04 | 24.00 | 22.83 |
| 3.5 | 21.99 | 14.63 | 24.33 | 42.40 |

Referring to Table 1, an example is provided to describe effect on compressive strength of the geopolyner-cured samples when not subjected to sintering and when subjected to sintering process at three different temperatures. The compressive strengths of the porous geopolymer-cured samples were measured using a mechanical testing machine, Automatic Max (Instron, 5569 USA). The samples were tested for three days after the sintering process. Physical observations showed decolorization of all samples. The compressive strength development of the porous geopolymer samples before and after temperature exposure with the three sodium silicate and sodium hydroxide in concentration ratio of 2.5, 3.0 and 3.5.

The compressive strength of the geopolymer significantly improved with an increase in the sintering temperature and as the ratio increased. An increase in the sodium silicate and sodium hydroxide concentration ratio resulted in an increase in sodium content of the alkaline activator and geopolymer mixture, which in turn produce more stable strength properties towards the geopolymer. Rapid strength development occurred within the geopolymer samples with higher concentrations of sodium hydroxide, especially within the sodium silicate. The sample having the sodium silicate to sodium hydroxide concentration ratio of 3.5 showed the highest compressive strength of 42.40 MPa with the highest sintering temperature, 1000°C, compared to the other three samples.

## Claims

1. A method of coating a geopolyner onto an article that is made of high heat applicable material, the method comprising the steps of providing geopolymer paste prepared from reacting fly ash-derived pozzolanic material with an alkaline activator solution;
coating the geopolymer paste onto the article;
curing the coated article; and
sintering the cured article at a temperature ranging from 100°C to 1500°C.

2. A method according to claim I further comprising providing clay-based pozzolanic material, volcano mud-based pozzolanic material, marine clay-based pozzolanic material or a combination thereof to the fly ash-derived pozzolanic material prior to reacting with the alkaline activator solution.

3. A method as claimed in claim 1, wherein the high heat applicable material is concrete, clay, ceramic, metal or alloy.

4. A method according to claim 1, wherein the concentration ratio between fly ash-derived pozzolanic material to alkaline activator is 2.5 ― 3.5 : 1.

5. A method according to claim 1, wherein the alkaline activator solution is formed by sodium silicate and sodium hydroxide.

6. A method according to claim 5, wherein the sodium silicate consists 8-10% of sodium oxide, 25-35% of silicon dioxide, and 55-65% of water.

7. A method according to claim 1, wherein the coated article is cured at temperature ranging from 60°C to 75°C.

8. A method according to claim 1, wherein the sintering process of the cured article has heating and cooling rates ranging from 3°C/minutes to 8°C/minutes.

9. A method according to claim 1, wherein the sintered article has a compressive strength ranging from 14 MPa to 45 MPa.

## Amended claims

### Amended claims in accordance with Rule 137(2) EPC.

**1.** A method of coating a geopolymer onto an article that is made of high heat applicable material, the method comprising the steps of
providing geopolymer paste prepared from reacting fly ash-derived pozzolanic material with an alkaline activator solution;
coating the geopolymer paste onto the article;
curing the coated article; and
sintering the cured article at a temperature ranging from 100°C to 1500°C, wherein the alkaline activator solution is formed by sodium silicate and sodium hydroxide and the concentration ratio between sodium silicate to sodium hydroxide ranges from 2.5 : 1 to 3.5 : 1.

**2.** A method according to claim 1 further comprising provided clay-based pozzolanic material, volcano mud-based pozzolanic material, marine clay-based pozzolanic material or a combination thereof to the fly ash-derived pozzolanic material prior to reacting with the alkaline activator solution.

**3.** A method as claimed in claim 1, wherein the high heat applicable material is concrete, clay, ceramic, metal or alloy.

**4.** A method according to claim 1, wherein the concentration ratio between fly ash-derived pozzolanic material to alkaline activator is 2.5 - 3.5 : 1.

**5.** A method according to claim 1, wherein the sodium silicate consists 8-10% of sodium oxide, 25-35% of silicon dioxide, and 55-65% of water.

**6.** A method according to claim 1, wherein the coated article is cured at temperature ranging from 60°C to 75°C.

**7.** A method according to claim 1, wherein the sintering process of the cured article has heating and cooling rates ranging from 3°C/minutes to 8°C/minutes.
